# EUROPÄISCHE PATENTSCHRIFT

(11) **EP 1 345 671 B1**
(45) Veröffentlichungstag und Bekanntmachung des Hinweises auf die Patenterteilung: **09.06.2004**
(21) Anmeldenummer: 01986906.4
(22) Anmeldetag: 19.12.2001
(51) Int. Cl.: B01D 53/54, B01D 53/73

(54) **VERFAHREN ZUR REINIGUNG VON OFFGASEN AUS EINER MELAMINANLAGE**
METHOD FOR PURIFYING BY-PRODUCT GASES FROM A MELAMINE MANUFACTURING INSTALLATION
PROCEDE POUR NETTOYER DES SOUS-PRODUITS GAZEUX D'UNE INSTALLATION DE FABRICATION DE MELAMINE

(30) Priorität: 27.12.2000 AT 21462000
(43) Veröffentlichungstag der Anmeldung: 24.09.2003
(73) Patentinhaber: AMI Agrolinz Melamine International GmbH, 4021 Linz (AT)
(72) Erfinder: COUFAL, Gerhard, A-4060 Leonding (AT); WAGNER, Hans, Christian, A-1235 Wien (AT); RUECH, Wolfgang, A-4753 Taiskirchen (AT)
(74) Vertreter: Gross, Felix
(86) Internationale Anmeldenummer: PCT/EP2001/015058
(87) Internationale Veröffentlichungsnummer: WO 2002/051527

(56) Entgegenhaltungen:
- WO-A-00/32566
- WO-A-98/08808
- DE-A- 2 053 358
- US-A- 3 682 911

## Beschreibung

Die Anmeldung betrifft ein Verfahren zur Reinigung von Offgasen aus einer Hochdruck-Melaminanlage durch Zusatz von CO₂.

Bei den Hochdruckverfahren zur Herstellung von Melamin werden Harnstoffschmelze und gasförmiges NH₃ ohne Anwesenheit eines Katalysators meist bei Temperaturen zwischen 325 und 450 °C, bevorzugt zwischen 350 und 425 °C und Drücken zwischen 50 und 250 bar zu flüssigem Melamin und Offgas, hauptsächlich bestehend aus NH₃ und CO₂, mit geringen Mengen an gasförmigem Melamin, umgesetzt. Dabei ist es vorteilhaft, das bei hohem Druck anfallende NH₃ und CO₂ in eine Harnstoffanlage rückzuführen.
Zu diesem Zweck ist es jedoch nötig, das Offgas vom Melaminanteil zu befreien, da Melamin in der Harnstoffanlage unerwünscht ist.

In US 3,700 672 wird ein Verfahren zur Reinigung der bei einer Hochdruck-Melaminsynthese anfallenden Offgase beschrieben, in dem die Gasmischung, welche geringe Teile an Melamin enthält, in engen Kontakt mit einer Harnstoffschmelze gebracht wird. Dabei wird das Melamin von der Harnstoffschmelze absorbiert und ein bestimmter Teil an NH₃ und CO₂ in der Harnstoffschmelze gelöst. Die so angereicherte und durch die heißen Offgase vorgewärmte Harnstoffschmelze wird anschließend dem Hochdruck-Melaminreaktor zugeführt, während die vom Melamin befreiten und durch die Harnstoffschmelze gekühlten Offgase in eine Harnstoffanlage eingebracht werden.
Für die Einbringung der Offgase in eine Harnstoffanlage werden in der Literatur unterschiedliche Varianten beschrieben, die sich hauptsächlich in der Art der Offgasaufarbeitung vor der Einbringung, im Ort der Einbringung in die Harnstoffanlage und in der Art des angewandten Harnstoffprozesses unterscheiden. Gemäß US 3 492 302 wird das von der Melaminanlage stammende, gereinigte Offgas in einer wässrigen Carbamatlösung absorbiert und als solches in den Reaktor einer Harnstoffanlage eingebracht. Die Kondensation des Offgases mit Hilfe von wässrigen Lösungen ist nötig, da Harnstoffreaktoren im allgemeinen bei Drücken von 125 bar oder höher betrieben werden und die Melaminoffgase im allgemeinen bei niedrigeren Drücken anfallen. Es ist jedoch nicht gewünscht, in den Harnstoffprozeß zusätzlich Wasser einzubringen, da dieses den Umsatz im Harnstoffreaktor negativ beeinflußt. Am günstigsten wäre es deshalb, das Melaminoffgas direkt das heißt ohne Kondensation in den Hochdruckteil einer Harnstoffanlage einzubringen. In diesem Fall muß die Melaminanlage das heißt auch der Harnstoffwäscher bei einem höheren Druck als der Hochdruckteil der Harnstoffanlage betrieben werden.
In US 3 723 430 wird das Melaminoffgas, abhängig vom Druck, bei dem es in der Melaminanlage anfällt, entweder direkt (bei mehr als 130bar) oder gemeinsam mit Wasser oder wässriger Carbonatlösung (bei weniger als 130 bar) der Harnstoffanlage zugeführt. WO 98/08808 beschreibt ebenfalls die direkte Einbringung der Offgase einer Hochdruck-Melaminanlage in den Hochdruckteil eines Harnstoff-Stripping-Prozesses.

Für die direkte Einbringung der Offgase in eine Harnstoffanlage ist demnach ein möglichst hoher Druck in der Melaminanlage wünschenswert. Ein hoher Druck ist darüber hinaus auch für die Melaminanlage als solche vorteilhaft: ein hoher Druck im Melaminreaktor begünstigt unter anderem im nachfolgenden Aufarbeitungsteil die Umwandlung von Nebenprodukten zu Melamin.

Die Schwierigkeit, der Forderung eines hohen Druckes in der Melaminanlage nachzukommen, liegt vor allem darin, daß es bei dem zur direkten Einbringung der Offgase in eine Harnstoffanlage erforderlichen hohen Druck im Harnstoffwäscher der Melaminanlage zu starker Carbamatbildung kommt.
Carbamat ist unerwünscht, da es bei höheren Temperaturen hochkorrosiv ist. Darüber hinaus wird durch Carbamat, welches gemeinsam mit der Harnstoffschmelze dem Melaminreaktor zugeführt wird, der im Melaminreaktor nötige Energiebedarf erhöht, weil zur Carbamatzersetzung Wärme zugeführt werden muß.

Es stellte sich demnach die Aufgabe, ein Verfahren zu finden, das es ermöglicht, den Harnstoffwäscher einer Hochdruck-Melaminanlage bei Bedingungen zu betreiben, welche einerseits eine Carbamatbildung weitgehend verhindern und andererseits die Bereitstellung der gereinigten Melaminoffgase bei ausreichend hohem Druck ermöglichen, um sie direkt in eine Harnstoffanlage zu überführen.

Unerwarteterweise konnte die Aufgabe dadurch gelöst werden, daß den von der Hochdruck-Melaminanlage kommenden Offgasen vor oder beim Eintritt in den Harnstoffwäscher CO₂ zugesetzt wird.

Gegenstand der vorliegenden Erfindung ist demnach ein Verfahren zur Reinigung der aus einer Hochdruck-Melaminanlage stammenden Offgase in einem Harnstoffwäscher, das dadurch gekennzeichnet ist, daß den Offgasen vor oder beim Eintritt in den Harnstoffwäscher gasförmiges CO₂ zugesetzt wird.
Die Zugabe von CO₂ ermöglicht es, den Harnstoffwäscher und damit den Hochdruckteil einer Melaminanlage bei hohen Drücken zu betreiben, ohne daß es im Harnstoffwäscher zur Bildung von störendem Carbamat kommt. Dadurch wird einerseits die direkte Einbringung der Melaminoffgase in eine Harnstoffanlage ermöglicht, andererseits wirkt sich der hohe Druck in der Melaminanlage positiv auf die Reinheit des Melamins aus.

Das zu reinigende Offgas kommt aus einer Hochdruck-Melaminanlage, in der Harnstoff bei einer Temperatur von 325 - 450 °C, bevorzugt von 350 - 425 °C und einem Druck von 50 - 450 bar, bevorzugt von 50-250 bar, besonders bevorzugt von 70 - 160 bar zu flüssigem Melamin und Offgas umgesetzt wird. Zur Vermeidung der Bildung von Nebenprodukten oder zur besseren Durchmischung im Reaktor wird dem Melaminreaktor üblicherweise überschüssiges NH₃ Gas von bis zu 10 mol NH₃, bevorzugt von bis zu 5 mol NH₃, besonders bevorzugt von bis zu 2 mol NH₃ pro mol Harnstoff zugesetzt.
Von der entstehenden Reaktionsmischung aus flüssigem Melamin und Offgas, bestehend aus NH₃ gas, CO₂ gas und geringen Mengen an gasförmigem Melamin, wird das flüssige Melamin abgetrennt. Das so erhaltene Offgas wird, gegebenenfalls gemeinsam mit dem Offgas aus weiteren Hochdruckteilen der Melaminanlage, welches ebenfalls aus gasförmigem NH₃, CO₂ und geringen Mengen an Melamin besteht, mit CO₂ gemischt und dem Harnstoffwäscher zugeführt.

Der Druck im Harnstoffwäscher ist etwa gleich oder niedriger als in den Apparaten, aus denen das melaminhältige Offgas stammt, er beträgt beispielsweise zwischen 50 und 450 bar.
Da die aus dem Wäscher abgezogenen Offgase bevorzugt ohne weitere Aufarbeitung in den Hochdruckteil einer Harnstoffanlage eingebracht werden, ist der Druck im Harnstoffwäscher bevorzugt etwa gleich oder höher als der Druck im Hochdruckteil der Harnstoffanlage, d.h. er ist je nach Typ der Harnstoffanlage bevorzugt höher als 125 bar, besonders bevorzugt höher als 155 bar. Er kann aber auch niedriger als der Druck im Hochdruckteil der Harnstoffanlage sein.
Die Temperatur im Harnstoffwäscher beträgt zwischen 135 und 250 °C, bevorzugt zwischen 170 und 230 °C. Die Temperaturuntergrenze wird dabei durch den Kristallisationspunkt der Harnstoffschmelze vorgegeben. Bei hohen Temperaturen hingegen herrschen in einer Harnstoffschmelze stark korrosive Bedingungen, auβerdem bilden sich in verstärktem Ausmaß Kondensationsprodukte wie Biuret und Triuret, welche eine höhere Viskosität als Harnstoff haben und Förderprobleme verursachen können. Darüberhinaus beginnt ab Temperaturen von etwa 250 °C Melamin zu sublimieren, was die Effizienz der Offgasreinigung im Harnstoffwäscher vermindert und einen unerwünschten Melamineintrag in die Harnstoffanlage verursacht.
Ein zentrales Problem in der Betriebsweise des Harnstoffwäschers ist die Bildung von Carbamat aus dem NH₃ und dem CO₂ des aus der Melaminanlage eingetragenen Offgases. Die Carbamatbildung ist abhängig vom Druck und von der Temperatur sowie vom Molverhältnis von NH₃ : CO₂. Bei gegebenem Molverhältnis und gegebenem Druck bildet sich unterhalb einer bestimmten Temperatur aus NH₃ und CO₂ Carbamat.
Carbamat ist im Melaminprozeß aus zwei Gründen unerwünscht: bei der Bildung des Carbamats wird Wärme frei, welche im Harnstoffwäscher zusätzlich zur mit dem Offgas eingebrachten Wärme abgeführt werden muß. Demgegenüber ist im Melaminreaktor, in welchen das Carbamat gemeinsam mit der Harnstoffschmelze aus dem Harnstoffwäscher eingetragen wird, zusätzliche Wärme nötig, um das Carbamat wieder zu NH₃ und CO₂ zu zersetzen. Um diese für die Carbamatzersetzung benötigte Wärme muß die Energiezufuhr zum Melaminreaktor erhöht werden, um den Harnstoffumsatz bei der endothermen Melaminbildungsreaktion nicht zu verschlechtern.
Zur Vermeidung der Carbamatbildung im Harnstoffwäscher muß die Temperatur oberhalb der vom Druck und dem Molverhältnis von NH₃ : CO₂ abhängigen Kondensationstemperatur gehalten werden. Da jedoch diese Mindesttemperatur mit steigendem Druck ebenfalls ansteigt, ergeben sich bei den für die direkte Offgasrückführung in die Harnstoffanlage geforderten Drücken die erwähnten Korrosionsund Viskositätsprobleme im Harnstoffwäscher.

Die Betriebsweise des Harnstoffwäschers betreffend stehen sich somit widersprüchliche Anforderungen gegenüber: ein möglichst hoher Druck im Sinne der direkten Einbringung der Offgase in die Harnstoffanlage sowie eine möglichst niedrige Temperatur im Sinne einer reibungslosen Fahrweise ohne Korrosionsprobleme und ohne Melamineintrag in die Harnstoffanlage. Demgegenüber steht die auf jeden Fall zu vermeidende Carbamatbildung.

Diese komplexen Anforderungen an einen integrierten Melamin- und Harnstoffprozeß können dadurch erfüllt werden, daß dem Offgas der Melaminanlage unmittelbar vor dem Eintritt in den Harnstoffwäscher CO₂ zugesetzt wird.

Mit sinkendem Molverhältnis von NH₃ : CO₂ verschiebt sich die Carbamat-Kondensationstemperatur zu niedrigeren Werten das heißt, durch Zugabe von CO₂ zum Offgas vor dem Eintritt in den Harnstoffwäscher kann dieser bei niedrigeren Temperaturen und den geforderten hohen Drücken betrieben werden, ohne daß es zur Carbamatbildung kommt.

Das aus dem Hochdruckteil der Melaminanlage stammende Offgas hat üblicherweise ein Molverhältnis von NH₃ : CO₂ von 2 : 1 oder darüber. Im allgemeinen ist das Molverhältnis von NH₃ : CO₂ höher als 3, da nicht nur das stöchiometrisch aus Harnstoff gebildete NH₃ im Offgas ist, sondern dem Reaktor und in den meisten Fällen auch den anderen Hochdruckapparaten der Melaminanlage zusätzlich NH₃ zugeführt wird, welches gemeinsam mit dem Offgas dem Harnstoffwäscher zugeführt wird.
Bei einer Temperatur im Harnstoffwäscher von etwa 200 °C und einem Molverhältnis im Offgas von beispielsweise 3,3 mol NH₃ / mol CO₂ kommt es bei einem Druck bis zu etwa 115 bar zu praktisch keiner Carbamatbildung. Dieser Druck ist jedoch für eine direkte Einbringung der Offgase in den Hochdruckteil der Harnstoffanlage zu niedrig.
Für die direkte Offgaseinbringung in den Hochdruckteil der Harnstoffanlage ist ein Druck von mindestens etwa 130 bar erforderlich. Das für diesen Druck zur Vermeidung von Carbamatbildung maximale Molverhältnis liegt unterhalb von etwa 2,5 mol NH₃ / mol CO₂ das heißt, dem Offgas aus dem Hochdruckteil der Melaminanlage muß eine bestimmte Menge CO₂ zugesetzt werden.

Der Zusatz von CO₂ zum Offgas bringt auch dann Vorteile, wenn die gereinigten Offgase, welche am Kopf des Harnstoffwäschers abgezogen werden, nicht direkt sondern gemeinsam mit wässrigen Lösungen oder in kondensierter Form in den Hochdruckteil einer Harnstoffanlage eingebracht werden. In diesem Fall können der Harnstoffwäscher und der Hochdruckteil der Melaminanlage auf niedrigerem Druck betrieben werden. Der Zusatz von CO₂ zum Offgas ermöglicht dann wiederum eine Erniedrigung der Temperatur im Harnstoffwäscher ohne daß es zur Bildung von Carbamat kommt.

Das aus dem Hochdruckteil der Melaminanlage stammende Offgas wird dem Harnstoffwäscher mit einer Temperatur von beispielsweise etwa 300 - 450 °C, bevorzugt von 320 - 425 °C zugeführt. Unmittelbar vor oder gleichzeitig mit dem Eintritt in den Harnstoffwäscher wird dem Offgas CO₂ , bevorzugt gasförmiges CO₂ zugegeben. Die zugeführte Menge an CO₂ ist so zu wählen, daß anschließend an die Offgasreinigung im Harnstoffwäscher eine direkte Einbringung des Offgases in die jeweilige Harnstoffanlage möglich ist. Dies ist beispielsweise bei einem Molverhältnis von NH₃ : CO₂ von weniger als 2,5, bevorzugt weniger als 2, besonders bevorzugt weniger als 1,9, insbesondere weniger als 1,8 der Fall. Soll die Melaminanlage bei sehr hohen Drücken betrieben werden, sind auch Molverhältnisse von etwa 1,75 oder weniger möglich.
Das CO₂ wird beispielsweise über eine oder mehrere Düsen, Ejektoren oder beliebige andere Sprühvorrichtungen in den Offgasstrom vor dem Eintritt in den Harnstoffwäscher eingebracht. Eine gute Durchmischung der Gase wird etwa durch eine feine Verteilung des CO₂ beim Einbringen erreicht. Das CO₂ kann jedoch auch direkt in der Eintrittsvorrichtung des Offgases in den Harnstoffwäscher dem Offgas beigemengt werden. Die Eintrittsvorrichtung kann beispielsweise als eine oder mehrere Sprühdüsen, Lochverteiler oder beliebige andere Zerstäubungsvorrichtung ausgeführt sein.
Der Druck des zugeführten CO₂ ist in etwa gleich oder höher als der Druck am Vermischungspunkt mit dem Offgas der Melaminanlage, beispielsweise beträgt er zwischen 50 und 450 bar, bevorzugt zwischen 50 und 250 bar, besonders bevorzugt zwischen 70 und 160 bar.
Die Temperatur des CO₂ beträgt beispielsweise etwa zwischen 50 und 450 °C, bevorzugt etwa zwischen 100 und 150 °C, besonders bevorzugt zwischen 100 und 120°C.
Das mit dem CO₂ vermengte melaminhältige Offgas wird dem Harnstoffwäscher zugeführt, in welchen gleichzeitig frische Harnstoffschmelze mit einer Temperatur von etwa 135 - 150 °C zugefürt wird. Die Frischharnstoffschmelze kontaktiert im Gegenstrom heiße Offgas, dabei kommt es zum Wärmeaustausch, das Offgas wird abgekühlt und die Harnstoffschmelze wird vorgewärmt. Das im Offgas enthaltene gasförmige Melamin wird von der Harnstoffschmelze absorbiert. Gleichzeitig wird ein dem Löslichkeitsgleichgewicht bei den im Harnstoffwäscher herrschenden Druck- und Temperaturbedingungen entsprechender Teil von NH₃ gas und CO₂ gas in der Harnstoffschmeize gelöst. Da die Löslichkeit des CO₂ in der Harnstoffschmelze sehr gering ist, bewirkt der CO₂-Zusatz vor dem Harnstoffwäscher keine Erhöhung des CO₂-Gehalts in der Harnstoffschmelze, verglichen mit nicht mit CO₂ versetztem Melaminoffgas.
Die Harnstoffschmelze wird am Boden des Harnstoffwäschers abgezogen und dem Melaminreaktor zugeführt.

Die durch das heiße Offgas in den Harnstoffwäscher eingebrachte Wärme und die beim Lösen von NH₃ gas und CO₂ gas in der Harnstoffschmelze freiwerdende Wärme kann zur Erzeugung von Dampf genutzt werden.

Die vom Melamin befreiten Offgase, bestehend aus NH₃ gas und CO₂ gas werden am Kopf des Harnstoffwäschers abgezogen und einer Harnstoffanlage zugeführt. Dabei erfolgt die Einbringung bevorzugt in einen sogenannten Harnstoff-Stripping-Prozeß.

Eine Harnstoff-Stripping-Anlage ist dadurch gekennzeichnet, daß im Harnstoffreaktor nicht umgesetzte Ausgangsprodukte in einem nachfolgenden Stripper, der in etwa bei demselben Druck wie der Harnstoffreaktor arbeitet, entweder mit Hilfe eines Stripping-Gases wie beispielsweise NH₃ oder CO₂ oder aber thermisch aus der Synthesemischung abgestrippt werden. Das nicht umgesetzte NH₃ und CO₂ wird somit großteils über die Gasphase in den Reaktor rückgeführt, sodaß keine großen Wasserzusätze, die den Umsatz im Harnstoffreaktor herabsetzen, wie beispielsweise in konventionellen Harnstoffanlagen der Fall, nötig sind. Ein weiteres Kennzeichen, betreffend die Wärmebilanz, ist, daß Wärme nur in einem Heizer, dem Stripper, importiert wird und diese im anschließenden Carbamat-Kondensator rückgewonnen wird.

Eine Harnstoff-Stripping-Anlage ist beispielsweise in Ullmann, 5^{th} ed., vol. A 27, 1996, p 344 - 346, beschrieben. Sie besteht beispielsweise aus einem Harnstoffreaktor, der im allgemeinen bei Drücken zwischen 125 und 175 bar und Temperaturen zwischen 160-220 °C betrieben wird. Ein weiterer Bestandteil ist beispielsweise ein Hochdruck-Stripper, ein Hochdruck-Carbamat-Kondensator, gegebenenfalls ein Pre-Reaktor, ein Hochdruck-Scrubber, sowie eine Niederdruck-Zersetzer-Absorber-Stufe sowie eine Eindampferstufe.
Die Harnstoff-Stripping-Anlage kann aber auch wie beispielsweise in Ullmann, 5^{th} ed., vol. A 27, 1996, p 346 - 348 beschrieben, ausgeführt sein und beispielsweise einen Reaktor, der bei etwa 150 bar arbeitet, einen Stripper, einen Hochdruck-Carbamat-Kondensator, einen Carbamat-Separator, eine Mitteldruck-Zersetzer-Absorber-Stufe, eine Niederdruck-Zersetzer-Absorber-Stufe sowie eine oder mehrere Eindampferstufe beinhalten.

Die Einbringung von CO₂ in den Offgasstrom einer Melaminanlage vor dem Harnstoffwäscher bringt die oben erwähnten Vorteile und bedeutet im Hinblick auf die Harnstoffsynthese keinen Mehraufwand. Bei einem Anlagenverbund aus Harnstoff- und Melaminanlage ist es für die Mengenbilanz der Harnstoffanlage belanglos, ob ein Teil des insgesamt benötigten CO₂ vor dem Eintritt in den Hochdruckteil der Harnstoffanlage durch den Harnstoffwäscher der Melaminanlage geführt wird.

Das im Harnstoffwäscher vom Melamin befreite und mit CO₂ gas vermengte Offgas wird mit einem Druck von beispielsweise 50 - 450 bar, bevorzugt 125 - 250 bar, besonders bevorzugt 70 - 160 bar und einer Temperatur von 135 - 250 °C, bevorzugt von 170 - 230 °C aus dem Wäscher abgezogen.
Das Offgas wird anschließend bevorzugt direkt, das heißt ohne weitere Aufarbeitung in den Hochdruckteil der Harnstoffanlage eingebracht. Es kann jedoch auch gemeinsam mit wässrigen Lösungen oder in kondensierter Form, beispielsweise als wässrige Carbamatlösung in den Hochdruckteil einer Harnstoffanlage eingebracht werden. In diesem Fall wird das Offgas unter Zugabe von beispielsweise Wasser oder wässriger Carbonat- oder Carbamatlösung als Kondensationshilfe in einer oder mehreren Stufen kondensiert; die dabei freiwerdende Wärme kann zum Vorwärmen von im Harnstoffprozeß anfallenden Strömen und/oder zur Dampferzeugung genützt werden.

Das Offgas aus dem Harnstoffwäscher kann an verschiedenen Stellen des Hochdruckteils einer Harnstoffanlage eingebracht werden, beispielsweise wird es dem Harnstoffreaktor, dem Stripper, dem Hochdruck-Carbamat-Kondenser, dem Pre-Reaktor oder dem Carbamat-Separator zugeführt. Es kann aber auch an jeder anderen Stelle der Harnstoffanlage eingebracht werden, von wo aus eine Rückführung in den Harnstoffreaktor erfolgt.
Dabei kann die Einbringung direkt oder mit Hilfe von Ejektoren oder Pumpen stattfinden.

Das für einen Harnstoff-Stripping-Prozeß allgemein übliche molare NH₃ : CO₂-Verhältnis im Synthesereaktor beträgt im optimalen Fall 2:1, üblicherweise liegt es bei etwa 3:1.
Das dem Hochdruckteil der Harnstoffanlage zugeführte Offgas aus der Hochdruck-Melaminanlage hat bevorzugt ein molares NH₃ : CO₂-Verhältnis von kleiner als 2,5. Das zum Erreichen des oben genannten Molverhältnisses fehlende NH₃ wird ebenfalls in den Hochdruckteil der Harnstoffanlage eingebracht. Dabei kann die Einbringung wiederum an jeder beliebigen Stelle, von der aus eine Rückführung in den Harnstoffreaktor erfolgt, stattfinden. Bevorzugterweise wird soviel NH₃ zugefügt, daß das für eine maximale Harnstoffausbeute im jeweils verwendeten Harnstoffreaktor benötigte molare NH₃ : CO₂-Verhältnis erreicht wird.

## Patentansprüche

1. Verfahren zur Reinigung der aus einer Hochdruck-Melaminanlage stammenden Offgase in einem Harnstoffwäscher, **dadurch gekennzeichnet, daß** den Offgasen vor oder beim Eintritt in den Harnstoffwäscher CO₂ zugesetzt wird.

2. Verfahren gemäß Anspruch 1, **dadurch gekennzeichnet, daß** eine solche Menge CO₂ zugesetzt wird, daß das molare Verhältnis von NH₃ : CO₂ im Offgas vor oder beim Eintritt in den Harnstoffwäscher kleiner als 2,5, bevorzugt kleiner als 2, besonders bevorzugt kleiner als 1,9, insbesondere kleiner als 1,8 ist.

3. Verfahren gemäß Anspruch 1, **dadurch gekennzeichnet, daß** die Temperatur des zugesetzten CO₂ zwischen 50 und 450 °C, bevorzugt zwischen 100 und 150 °C, besonders bevorzugt zwischen 100 und 120 °C liegt.

4. Verfahren gemäß Anspruch 1, **dadurch gekennzeichnet, daß** der Druck des zugesetzten CO₂ etwa gleich oder höher als der Druck des Offgases der Melaminanlage ist.

5. Verfahren gemäß Anspruch 1, **dadurch gekennzeichnet, daß** die gereinigten Offgase einer Harnstoffanlage zugeführt werden.

6. Verfahren gemäß Anspruch 1, **dadurch gekennzeichnet, daß** die gereinigten Offgase direkt ohne weitere Aufarbeitung einer Harnstoffanlage zugeführt werden.

7. Verfahren gemäß Anspruch 1, **dadurch gekennzeichnet, daß** die gereinigten Offgase einer Harnstoff-Stripping-Anlage zugeführt werden.

8. Verfahren zur kombinierten Herstellung von Melamin und Harnstoff, **dadurch gekennzeichnet, daß** die in einer Hochdruck-Melaminanlage anfallenden Offgase mit CO₂ versetzt, in einem Harnstoffwäscher von Melamin befreit und anschließend dem Hochdruckteil einer Harnstoffanlage zugeführt werden, während der dort hergestellte Harnstoff ganz oder teilweise zur Vorwärmung in den Harnstoffwäscher und anschließend in einen Hochdruckreaktor zur Herstellung von Melamin eingebracht wird.

## Claims

1. Process for cleaning the offgases stemming from a high-pressure melamine plant, **characterized in that** CO₂ is added to the offgases before or on entry into the urea scrubber.

2. Process according to Claim 1, **characterized in that** the amount of CO₂ added is such that the molar NH₃:CO₂ ratio in the offgas before or on entry into the urea scrubber is less than 2.5, preferably less than 2, particularly preferably less than 1.9, in particular less than 1.8.

3. Process according to Claim 1, **characterized in that** the temperature of the added CO₂ is between 50 and 450°C, preferably between 100 and 150°C, particularly preferably between 100 and 120°C.

4. Process according to Claim 1, **characterized in that** the pressure of the added CO₂ is approximately equal to or higher than the pressure of the offgas of the melamine plant.

5. Process according to Claim 1, **characterized in that** the cleaned offgases are fed to a urea plant.

6. Process according to Claim 1, **characterized in that** the cleaned offgases are fed directly to a urea plant without further workup.

7. Process according to Claim 1, **characterized in that** the purified offgases are fed to a urea stripping plant.

8. Process for combined preparation of melamine and urea, **characterized in that** the offgases resulting from a high-pressure melamine plant are admixed with CO₂, freed of melamine in a urea scrubber and subsequently fed to the high-pressure section of a urea plant, while all or some of the urea prepared there is introduced into the urea scrubber for preheating and subsequently into a high-pressure reactor for preparing melamine.

## Revendications

1. Procédé de purification de gaz de rejet provenant d'une installation de mélamine haute pression dans un laveur à urée, **caractérisé en ce que** l'on ajoute du CO₂ aux gaz de rejet avant ou lors de l'entrée dans le laveur à urée.

2. Procédé selon la revendication 1, **caractérisé en ce que** l'on ajoute une quantité de CO₂ telle que le rapport molaire de NH₃:CO₂ dans le gaz de rejet, avant ou lors de l'entrée dans le laveur à urée, est inférieur à 2,5, de préférence inférieur à 2, en particulier, de préférence inférieur à 1,9, en particulier inférieur à, 1,8.

3. Procédé selon la revendication 1, **caractérisé en ce que** la température du CO₂ ajouté se situe entre 50 et 450°C, de préférence entre 100 et 150°C, en particulier, de préférence entre 100 et 120°C.

4. Procédé selon la revendication 1, **caractérisé en ce que** la pression du CO₂ ajouté est environ égale ou supérieure à la pression du gaz de rejet de l'installation de mélamine.

5. Procédé selon la revendication 1, **caractérisé en ce que** les gaz de rejet purifiés sont acheminés à une installation d'urée.

6. Procédé selon la revendication 1, **caractérisé en ce que** les gaz de rejet purifiés sont acheminés directement, sans autre mise en oeuvre, à une installation d'urée.

7. Procédé selon la revendication 1, **caractérisé en ce que** les gaz purifiés sont acheminés à une installation de stripage d'urée.

8. Procédé en vue de la fabrication combinée de mélamine et d'urée, **caractérisé en ce que** les gaz de rejet se formant dans une installation de mélamine haute pression sont mélangés à du CO₂, sont débarrassés de la mélamine dans un laveur à urée et sont ensuite acheminés à la partie haute pression d'une installation d'urée, alors que l'urée qui y est fabriquée est introduite, complètement ou partiellement, en vue du chauffage préalable, dans le laveur à urée et ensuite dans un réacteur haute pression, en vue de la fabrication de mélamine.
